# EUROPEAN PATENT SPECIFICATION

(11) **EP 2 525 646 B1**
(45) Date of publication and mention of the grant of the patent: **01.11.2017**
(21) Application number: 10702043.0
(22) Date of filing: 22.01.2010
(51) Int. Cl.: A01G 3/053

(54) **HEDGE TRIMMER BLADE ASSEMBLY WITH EMBOSSMENTS**
HECKENSCHERENKLINGEANORDNUNG MIT PRÄGUNGEN
ENSEMBLE LAME DE TAILLE-HAIE COMPORTANT DES NERVURES

(43) Date of publication of application: 28.11.2012
(73) Proprietor: HUSQVARNA AB, 561 82 Huskvarna (SE)
(72) Inventor: SCHLEIFER, Herbert, 89312 Günzburg (DE)
(86) International application number: PCT/EP2010/000371
(87) International publication number: WO 2011/088846

(56) References cited:
- WO-A1-2007/134782
- US-A- 5 802 947
- US-A- 6 145 426

## Description

### TECHNICAL FIELD

The present invention relates to a cutting apparatus. More particularly, the present invention relates to a method and a system for reducing friction between two reciprocating blades of the cutting apparatus for example, a hedgetrimmer.

### BACKGROUND

A cutting apparatus like a hedgetrimmer includes a motor, a pair of cutting blades driven by the motor and a gearbox assembly. The cutting blades of a hedgetrimmer are disposed adjacent to each other in a superimposed relationship such that, the cutting blades are arranged to reciprocate relative to each other along a longitudinal axis. Typically, one of the cutting blades is fixed and the other blade is driven by the motor. Each of the cutting blades has a plurality of cutting teeth which are orthogonally disposed about the longitudinal axis of the cutting blade. The motor of the hedgetrimmer is connected to a battery or another power supplying means to operate the cutting blades.

During operation, contact surfaces of the cutting blades move over the adjoining surface and cause friction. Typically, during operation frictional hindrance between the reciprocating cutting blades causes operational limitations. The friction leads to excessive heat generation and premature wear and tear of cutting blades. Additionally, the friction may reduce the operating efficiency of the cutting apparatus.

Various methods and systems are well known in art to reduce friction between the reciprocating cutting blades, see e.g. document WO-A-2007/134782. Primarily lubrication or an oiling circuit is employed to introduce lubricant or oil between the cutting blades during operation. Though lubrication partially addresses the friction, and the lubricant or oil on cutting blades also attracts dust or debris during operation. Further, the lubrication or the oiling circuit requires a pump and driving means for the same. This adds complexities to the cutting apparatus and also makes the manufacturing process expensive.

In light of the foregoing, there is a need for an improved method and system to reduce friction between the cutting blades of a cutting apparatus for example, hedgetrimmer.

### SUMMARY

In view of the above, it is an objective to solve or at least reduce the problems discussed above. In particular, an objective is to provide an improved cutting apparatus with a pair of reciprocating cutting blades to effectively reduce friction between the cutting blades.

The objective is achieved with a novel cutting blade assembly according to claim 1. Due to the embossments on the sliding portion a contact area between adjacent the cutting blades of a cutting apparatus is significantly reduced. During operation, the friction between the cutting blades of the cutting apparatus reduces due to the reduction in the contact area.

According to claim 2, the embossments are positioned about a longitudinal axis of the cutting blade. Further, the embossments about the longitudinal axis may be positioned in various configurations. According to claim 3, one embossment is positioned between two successive elongated holes incorporated along the longitudinal axis of the cutting blade. Further, according to claim 4, at least two embossments are positioned, symmetrically, between the two successive elongated holes incorporated along the longitudinal axis of the cutting blade. In another alternate configuration, according to claim 5, at least two embossments are positioned along an orthogonal direction to the longitudinal axis of the cutting blade. The embossments positioned along the orthogonal direction are at equal distance form the longitudinal axis of the cutting blade.

According to claims 6, 7 and 8, the embossments may extend to a height of at least 0.05 mm to about 0.2 mm above the surface of the cutting blade. The height of the embossment may be decided for maintaining an optimal tolerance between the cutting blades. Further, the height of the embossments may extend to 0.15 mm but the height of the embossments should not exceed 0.2 mm.

According to claim 9, a method for manufacturing the cutting blade assembly of a cutting apparatus is described. The method includes the step of making the cutting portion with the plurality of cutting teeth which are arranged at the spaced intervals. Further, the method includes a step of providing the embossment on the sliding portion of the cutting blade such that the embossments extend outwardly from the surface.

According to claims 10, 11, 12 and 13, method includes positioning the embossment in various configurations with respect to the longitudinal axis. For example, positioning one or more embossments between the two successive elongated holes incorporated along the longitudinal axis of the cutting blade. Also, the method may include positioning the at least two embossments are positioned along the orthogonal direction to the longitudinal axis at equal distance.

According to claim 14, providing the embossments may include a variety of techniques such as for example, stamping, applying a welding spot, welding, brazing of metal part and building up of metal by laser machining. According to claim 15, in case of stamping a blanking die may be used to limit the area of the embossments. In claim 16 a cutting apparatus is described in which at least one cutting blade is provided with the embossments on the sliding portion. Further, the embossments of the least one cutting blade are in contact with the surface of the adjacent cutting blade. This reduces friction between the superimposed surfaces of the cutting blades. The cutting apparatus have higher energy efficiency due to reduced frictional losses. Also, the cutting apparatus have enhanced life and increase efficiency.

According to claims 17 and 18 either an upper cutting blade or a lower cutting blade may be provided with the embossments. A lower surface of the upper cutting blade may be provided with embossments. Similarly an upper surface of the lower cutting blade may be provided with embossments. Further, according to claim 19, a motor is provided to drive the cutting blades.

### BRIEF DESCRIPTION OF THE DRAWINGS

The invention will in the following be described in more detail with reference to the enclosed drawings, wherein:
FIG.1 illustrates a cutting blade of a hedgetrimmer, according to an embodiment of the present invention;
FIG.2 illustrates a cutting blade of a hedgetrimmer, according to an alternate embodiment of the present invention;
FIG.3 illustrates a cutting blade of a hedgetrimmer, according to yet an alternate embodiment of the present invention; and
FIG. 4 illustrates a sectional view of an embossment, according to an embodiment of the present invention.

### DESCRIPTION OF EMBODIMENTS

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention, as defined in the appended claims, to those skilled in the art. In the drawings, like numbers refer to like elements.

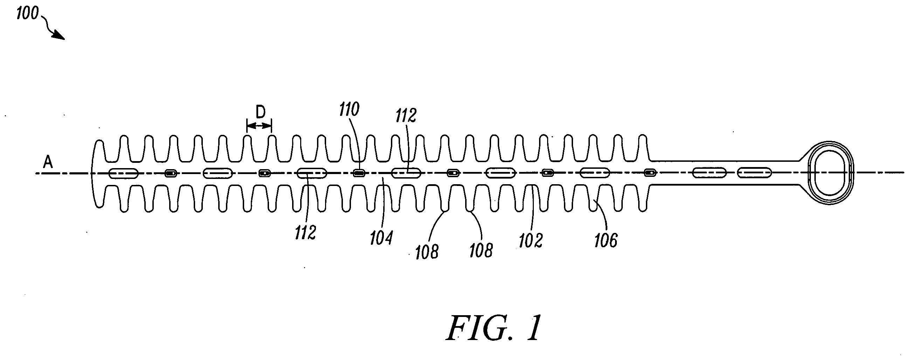

FIG. 1 illustrates a cutting blade **100** of a hedgetrimmer (not shown), according to an embodiment of the present invention. The hedgetrimmer (hereinafter referred to as the "cutting apparatus") may be used in gardening or forestry applications. However, the present invention may also be used in any another equipments such as for example, shears, or other cutting or pruning tools with a set of reciprocating blades without departing from the essence of the present invention.

Typically, the cutting apparatus includes a pair of reciprocating cutting blades in a superimposed relationship. In an embodiment of the present invention, the cutting apparatus includes the cutting blade **100** as one of the pair of reciprocating cutting blades. The cutting blade **100** includes a surface **102,** a sliding portion **104** and a cutting portion **106.** The surface **102** extends between the sliding portion **104** and the cutting portion **106.** In an embodiment of the present invention, the cutting portion **106** is disposed along periphery of the cutting blade **100** and includes a plurality of cutting teeth **108** which are arranged in at spaced intervals **D.** Further, the cutting teeth **108** may extend in a direction (hereinafter referred to as the "orthogonal direction") perpendicular to a longitudinal axis **A** of the cutting blade **100.** The longitudinal axis **A** extends along the length of the cutting blade **100.** The cutting apparatus may include a motor or any other suitable driving means to impart a reciprocating motion to the pair of the cutting blades along longitudinal axis **A.** In an embodiment of the present invention, one of the cutting blades may be fixed and the other cutting blade may be driven by the motor. In an alternate embodiment of the present invention, both of the cutting blades may be driven by the motor. In various other embodiments of the present invention, based on the utility of the cutting apparatus, the cutting portion **106** may include the cutting teeth **108** of similar or different shapes and sizes. The placement and spaced intervals **D** between the cutting teeth **108** may also be same or different. For example, in case of powered shears the pair of cutting blades may include distinct cutting teeth **108** which are placed on a front portion of each of the cutting blades.

In an embodiment of the present invention, at least one embossment **110** is provided on the sliding portion **104** of the cutting blade **100.** The embossments **110** are provided with respect to the surface **102** and extend outwardly from the surface **102.** During operation the embossments **110** may be in contact with an adjoining surface of the other cutting blade. In an embodiment of present invention, the embossments **110** are provided along the longitudinal axis **A** of the cutting blade **100.** Due to the presence of the embossments **110,** a reduction in the contact area between the pair of cutting blades reduces the frictional forces. By reducing the frictional forces, wear and tear of the cutting blades is substantially reduced and requirement of a complex lubrication/oiling circuit for the cutting apparatus is also avoided.

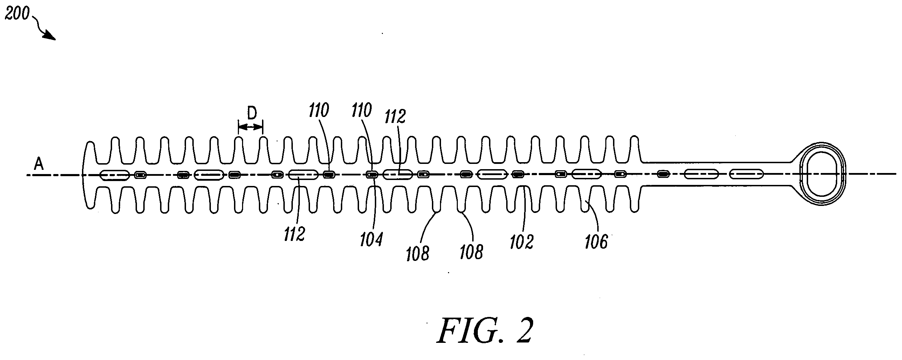

As shown in FIG. 1, the cutting blade may have elongated holes **112** incorporated along the longitudinal axis **A.** FIG. 2 illustrates a cutting blade **200,** in accordance with an alternate embodiment of the present invention, in which the at least two embossments **110** are symmetrically positioned about the elongated holes **112.** The embossments **110** are provided at an equal distance from the adjacent elongated holes **112.** In another embodiment of the present invention, based on the overall size of the cutting blade **200,** more than two embossments **110** may be positioned between the adjacent elongated holes **112.** The elongated holes **112** may have varying shapes and dimensions without departing from the essence of the present invention.

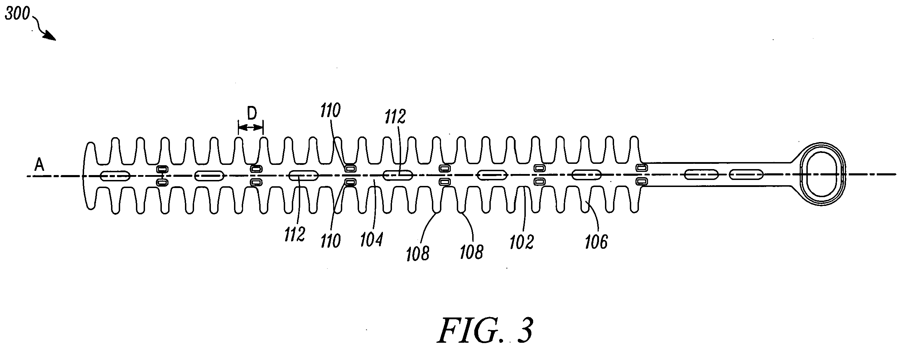

FIG. 3 illustrates a cutting blade **300** in accordance with yet an alternate embodiment of the present invention. At least two embossments **110** are positioned along the orthogonal direction of the cutting blade **300.** The embossments **110** may be symmetrically positioned about the longitudinal axis **A.** In an embodiment of the present invention, the embossments **110** are positioned along the orthogonal direction at equal distance from the longitudinal axis **A** and symmetrically placed about the elongated holes **112.**

In an embodiment of the present invention, the pair of cutting blades for the cutting apparatus may include an upper blade and a lower blade. The upper blade and the lower blade may be arranged in the superimposed relationship and may reciprocate along an axis. In an embodiment of the present invention, a lower surface of the upper blade may be provided with the embossments **110.** In another embodiment of the present invention, an upper surface of the lower blade may be provided with the embossments **110.** The embossments **110** on the lower surface of the upper blade may be in contact with the sliding portion **104** of the lower blade. Similarly the embossments **110** on the upper surface of the lower blade may be in contact with the sliding portion **104** of the upper blade. In another embodiment of the present invention, the lower surface of the upper blade and the upper surface of the lower blade may be together provided with the embossments **110.** Such that, during operation the embossments **110** on the lower surface of the upper blade and the embossments **110** on the upper surface of the lower blade may be in contact with each other.

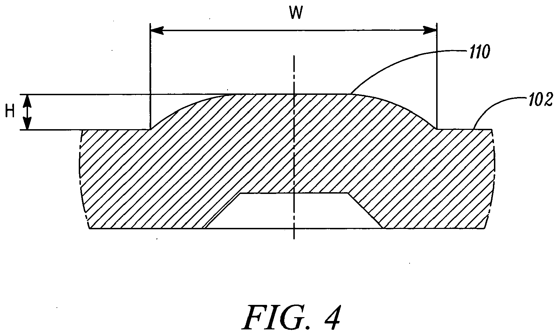

FIG. 4 illustrates a sectional view of the embossment **110** according to an embodiment of the present invention. The embossment **100** may have a height **H** with respect to the surface **102** and a width **W.** As discussed above, the height **H** of the embossment **110** may be preferably at least 0.05 mm and may be up to 0.15 mm, but less than 0.2 mm. In an embodiment of the present invention, the height **H** and the width **W** of the embossment **110** may be in a predetermined ratio.

In an embodiment of the present invention, the embossments **110** on the cutting blade **100** may be provided by a stamping process. During stamping a blanking die along with a suitable punch may be used to limit the area of the embossments **110.** In various other embodiments of the present invention, variety of techniques known in the art, for example but not limited to, welding, brazing and laser machining may be used to provide the embossments **110.** In an alternative embodiment of the present invention, a combination of one or more of the above techniques may be used to provide embossments **110** on the surface **102** of the cutting blade **100.**

In an embodiment of the present invention, embossments **110** generally have a rectangular shape and the longitudinal axis **A** passes through the center of the rectangular shape. In various other embodiments of the present invention, the embossments **110** may have other shapes for example but not limited to, triangular, circular, oval and the longitudinal axis A passes through the center of the centriod of the respective shapes.

As described above the embossments **110** in various other configurations may extend outwardly to a height of at least 0.05 mm with respect to the surface **102** of the cutting blade **100.** In another embodiment of the present invention, the embossments **110** may extend to a height of at least 0.05 mm with a predetermined tolerance in a range of about +0.02 mm. In the various other embodiments of the present invention, the embossments **110** may extend to a height at least 0.15 mm, but preferably less than 0.2 mm.

Although various embodiments herein are described with reference to a hedgetrimmer, those skilled in the art will appreciate that the teachings disclosed herein may be applied to any cutting device with a pair of reciprocating cutting blades for reducing friction between the cutting blades during a relative movement.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A cutting blade assembly for a cutting apparatus, the cutting blade assembly comprising at least two adjacent cutting blades, wherein at least one of the cutting blades is arranged to move in a reciprocal manner in relation to the other cutting blade(s), and wherein a first one of the at least two adjacent cutting blades **(100, 200, 300)** comprises:
a surface **(102),** a sliding portion **(104)** and a cutting portion **(106),** wherein the surface **(102)** extends between the sliding portion **(104)** and the cutting portion **(106);**
the cutting portion **(106)** comprises a plurality of cutting teeth **(108)** arranged at spaced intervals **(D);**
**characterized in that,**
the sliding portion **(104)** of the first cutting blade **(100, 200, 300)** is provided with at least one embossment **(110)** with respect to the surface **(102)** of the first cutting blade **(100, 200, 300),** and that the at least one embossment **(110)** of the first cutting blade **(100, 200, 300)** is arranged to be in contact with a surface of a second of the at least two adjacent cutting blades.

2. A cutting blade assembly according to claim 1, wherein the at least one embossment **(110)** is positioned along a longitudinal axis **(A)** of the first cutting blade **(100, 200, 300).**

3. A cutting blade assembly according to claim 2, wherein the at least one embossment **(110)** is positioned between two holes **(112)** incorporated along the longitudinal axis (**A**) of the first cutting blade **(100, 200, 300).**

4. A cutting blade assembly according to claim 2, wherein at least two embossments **(110)** are symmetrically positioned about holes **(112)** incorporated along the longitudinal axis **(A)** of the first cutting blade **(100, 200, 300).**

5. A cutting blade assembly according to claim 1, wherein at least two embossments **(110)** are positioned along a line perpendicular to a longitudinal axis **(A)** of the first cutting blade **(100, 200, 300),** and wherein the at least two embossments **(110)** are spaced at equal distance from the longitudinal axis **(A).**

6. A cutting blade assembly according to any of claims 1 to 5, wherein the at least one embossment **(110)** extends to a height **(H)** of at least 0.05 mm with respect to the rest of the surface **(102)** of the first cutting blade **(100, 200, 300).**

7. A cutting blade assembly according to any of claims 1 to 5, wherein the at least one embossment **(110)** extends to a height **(H)** of less than 0.15 mm with respect to the rest of the surface **(102)** of the first cutting blade **(100, 200, 300).**

8. A cutting blade assembly according to any of claims 1 to 5, wherein the at least one embossment **(110)** extends to a height **(H)** of less than 0.2 mm with respect to the rest of the surface **(102)** of the first cutting blade **(100, 200, 300).**

9. A method for manufacturing a cutting blade assembly for a cutting apparatus, the cutting blade assembly comprising at least two adjacent cutting blades, wherein at least one of the cutting blades is arranged to move in a reciprocal manner in relation to the other cutting blade(s), a first one of said at least two adjacent cutting blades (100, 200, 300) comprises a surface **(102),** a sliding portion **(104)** and a cutting portion **(106),** the surface **(102)** being arranged to be at least partially in contact with a corresponding surface of a second one of said at least two adjacent cutting blades, the method comprises:
providing the cutting portion **(106)** with a plurality of cutting teeth **(108)** arranged at spaced intervals **(D);** and
providing at least one embossment **(110)** on the sliding portion **(104)** with respect to the surface **(102)** of the first cutting blade **(100, 200, 300).**

10. A method according to claim 9 further comprises positioning the at least one embossment **(110)** along a longitudinal axis **(A)** of the first cutting blade **(100, 200, 300).**

11. A method according to claim 10 further comprises positioning the at least one embossment **(110)** between two holes **(112)** incorporated along the longitudinal axis **(A)** of the first cutting blade **(100, 200, 300).**

12. A method according to claim 10 further comprises positioning, symmetrically, at least two embossments **(110)** about holes **(112)** incorporated along the longitudinal axis **(A)** of the first cutting blade **(100, 200, 300).**

13. A method according to claim 9, further comprises positioning at least two embossments **(110)** along a line perpendicular to a longitudinal axis **(A)** of the first cutting blade **(100, 200, 300);** and spacing the at least two embossments **(110)** at equal distance from the longitudinal axis **(A).**

14. A method according to claims 9 to 13, wherein providing the at least one embossment **(110)** on the sliding portion **(104)** comprises:
at least one of:
stamping; applying a welding spot; welding; brazing of metal part; and building up of metal by laser machining.

15. A method according to claim 14, wherein providing the at least one embossment **(110)** by the stamping comprises using a blanking die to limit an area of the embossment **(110).**

16. A cutting apparatus comprising a cutting assembly comprising at least two adjacent cutting blades **(100, 200, 300),** the cutting blades **(100, 200, 300)** arranged to reciprocate with respect to each other, wherein at least one of the cutting blades **(100, 200, 300)** comprises:
a surface **(102),** a sliding portion **(104)** and a cutting portion **(106),** wherein the surface **(102)** extends between the sliding portion **(104)** and the cutting portion **(106);**
the cutting portion **(106)** comprises a plurality of cutting teeth **(108)** arranged at spaced intervals **(D),**
**characterized in that,**
the sliding portion **(104)** is provided with at least one embossment **(110)** with respect to the surface **(102),** and that the at least one embossment **(110)** of the at least one cutting blade **(100, 200, 300)** is in contact with the surface of the adjacent cutting blade **(100, 200, 300).**

17. A cutting apparatus according to claim 16 such that the two adjacent blades **(100, 200, 300)** are arranged one on top of the other, wherein the upper blade **(100, 200, 300)** comprises:
a lower surface **(102),** a sliding portion **(104)** and a cutting portion **(106),** wherein the lower surface **(102)** extends between the sliding portion **(104)** and the cutting portion **(106);**
the cutting portion **(106)** comprises a plurality of cutting teeth **(108)** arranged at spaced intervals **(D);** and
the sliding portion **(104)** is provided with at least one embossment **(110)** with respect to the lower surface **(102).**

18. A cutting apparatus according to claim 16 such that the two adjacent blades **(100, 200, 300)** are arranged one on top of the other, wherein the lower blade **(100, 200, 300)** comprises:
an upper surface **(102),** a sliding portion **(104)** and a cutting portion **(106),** wherein the upper surface **(102)** extends between the sliding portion **(104)** and the cutting portion **(106);**
the cutting portion **(106)** comprises a plurality of cutting teeth **(108)** arranged at spaced intervals **(D);** and
the sliding portion **(104)** is provided with at least one embossment **(110)** with respect to the upper surface **(102).**

19. A cutting apparatus according to claims 16 to 18 wherein the at least one of the cutting blades **(100, 200, 300)** is driven by a motor.

## Patentansprüche

1. Schneidklingenanordnung für ein Schneidgerät, wobei die Schneidklingenanordnung zumindest zwei benachbarte Schneidklingen umfasst, wobei zumindest eine der Schneidklingen so angeordnet ist, dass sie sich oszillierend in Bezug auf die andere(n) Schneidklinge(n) bewegt, und wobei eine erste der zumindest zwei benachbarten Schneidklingen (100, 200, 300) umfasst:
eine Oberfläche (102), einen Gleitabschnitt (104) und einen Schneidabschnitt (106), wobei die Oberfläche (102) sich zwischen dem Gleitabschnitt (104) und dem Schneidabschnitt (106) erstreckt;
wobei der Schneidabschnitt (106) eine Vielzahl von Schneidzähnen (108) umfasst, die in beabstandeten Intervallen (D) angeordnet sind;
**dadurch gekennzeichnet, dass**
der Gleitabschnitt (104) der ersten Schneidklinge (100, 200, 300) mit zumindest einer Einprägung (110) in Bezug auf die Oberfläche (102) der ersten Schneidklinge (100, 200, 300) versehen ist, und die zumindest eine Einprägung (110) der ersten Schneidklinge (100, 200, 300) so angeordnet ist, dass sie mit einer Oberfläche einer zweiten der zumindest zwei benachbarten Schneidklingen in Kontakt steht.

2. Schneidklingenanordnung nach Anspruch 1, wobei die zumindest eine Einprägung (110) entlang einer Längsachse (A) der ersten Schneidklinge (100, 200, 300) positioniert ist.

3. Schneidklingenanordnung nach Anspruch 1, wobei die zumindest eine Einprägung (110) zwischen zwei Löchern (112) positioniert ist, die entlang der Längsachse (A) der ersten Schneidklinge (100, 200, 300) einbezogen sind.

4. Schneidklingenanordnung nach Anspruch 1, wobei zumindest zwei Einprägungen (110) symmetrisch um Löcher (112), die entlang der Längsachse (A) der ersten Schneidklinge (100, 200, 300) einbezogen sind, positioniert sind.

5. Schneidklingenanordnung nach Anspruch 1, wobei zumindest zwei Einprägungen (110) entlang einer Linie senkrecht auf eine Längsachse (A) der ersten Schneidklinge (100, 200, 300) positioniert sind, und wobei die zumindest zwei Einprägungen (110) in einem gleichen Abstand von der Längsachse (A) beabstandet sind.

6. Schneidklingenanordnung nach einem der Ansprüche 1 bis 5, wobei die zumindest eine Einprägung (110) sich bis zu einer Höhe (H) von zumindest 0,05 mm in Bezug auf den Rest der Oberfläche (102) der ersten Schneidklinge (100, 200, 300) erstreckt.

7. Schneidklingenanordnung nach einem der Ansprüche 1 bis 5, wobei die zumindest eine Einprägung (110) sich bis zu einer Höhe (H) von weniger als 0,15 mm in Bezug auf den Rest der Oberfläche (102) der ersten Schneidklinge (100, 200, 300) erstreckt.

8. Schneidklingenanordnung nach einem der Ansprüche 1 bis 5, wobei die zumindest eine Einprägung (110) sich bis zu einer Höhe (H) von weniger als 0,2 mm in Bezug auf den Rest der Oberfläche (102) der ersten Schneidklinge (100, 200, 300) erstreckt.

9. Verfahren zur Herstellung einer Schneidklingenanordnung für ein Schneidgerät, wobei die Schneidklingenanordnung zumindest zwei benachbarte Schneidklingen umfasst, wobei zumindest eine der Schneidklingen so angeordnet ist, dass sie sich oszillierend in Bezug auf die andere(n) Schneidklinge(n) bewegt, wobei eine erste der zumindest zwei benachbarten Schneidklingen (100, 200, 300) eine Oberfläche (102), einen Gleitabschnitt (104) und einen Schneidabschnitt (106) umfasst, wobei Oberfläche (102) so angeordnet ist, dass sie zumindest zum Teil in Kontakt mit einer entsprechenden Oberfläche einer zweiten der zumindest zwei benachbarten Schneidklingen steht, wobei das Verfahren umfasst:
Versehen des Schneidabschnitts (106) eine Vielzahl von Schneidzähnen (108) umfasst, die in beabstandeten Intervallen (D) angeordnet sind; und
Vorsehen zumindest einer Einprägung (110) an dem Gleitabschnitt (104) in Bezug auf die Oberfläche (102) der ersten Schneidklinge (100, 200, 300).

10. Verfahren nach Anspruch 9, ferner umfassend das Positionieren der zumindest einen Einprägung (110) entlang einer Längsachse (A) der ersten Schneidklinge (100, 200, 300).

11. Verfahren nach Anspruch 10, ferner umfassend das Positionieren der zumindest einen Einprägung (110) zwischen zwei Löchern (112), die entlang der Längsachse (A) der ersten Schneidklinge (100, 200, 300) einbezogen sind.

12. Verfahren nach Anspruch 10, ferner umfassend das symmetrische Positionieren von zumindest zwei Einprägungen (110) um Löcher (112), die entlang der Längsachse (A) der ersten Schneidklinge (100, 200, 300) einbezogen sind.

13. Verfahren nach Anspruch 9, ferner umfassend das Positionieren von zumindest zwei Einprägungen (110) entlang einer Linie senkrecht auf eine Längsachse (A) der ersten Schneidklinge (100, 200, 300); und Beabstanden der zumindest zwei Einprägungen (110) in einem gleichen Abstand von der Längsachse (A).

14. Verfahren nach den Ansprüchen 9 bis 13, wobei das Bereitstellen der zumindest einen Einprägung (110) an dem Gleitabschnitt (104)
zumindest eines der folgenden umfasst:
Stanzen; Aufbringen eines Schweißpunkts; Schweißen; Anlöten eines Metallteils; und Aufbauen von Metall durch Laserbearbeitung.

15. Verfahren nach Anspruch 14, wobei das Vorsehen der zumindest einen Einprägung (110) durch Stanzen die Verwendung eines Stanzwerkzeugs umfasst, um einen Bereich der Einprägung (110) zu begrenzen.

16. Schneidgerät umfassend eine Schneidanordnung, umfassend zumindest zwei benachbarte Schneidklingen (100, 200, 300), wobei die Schneidklingen (100, 200, 300) so angeordnet sind, dass sie in Bezug aufeinander oszillieren, wobei zumindest eine der Schneidklingen (100, 200, 300) umfasst:
eine Oberfläche (102), einen Gleitabschnitt (104) und einen Schneidabschnitt (106), wobei die Oberfläche (102) sich zwischen dem Gleitabschnitt (104) und dem Schneidabschnitt (106) erstreckt;
wobei der Schneidabschnitt (106) eine Vielzahl von Schneidzähnen (108) umfasst, die in beabstandeten Intervallen (D) angeordnet sind,
**dadurch gekennzeichnet, dass,**
der Gleitabschnitt (104) mit zumindest einer Einprägung (110) in Bezug auf die Oberfläche (102) versehen ist, und die zumindest eine Einprägung (110) der zumindest einen Schneidklinge (100, 200, 300) in Kontakt mit einer Oberfläche der benachbarten Schneidklinge (100, 200, 300) in Kontakt steht.

17. Schneidgerät nach Anspruch 16, wobei die zwei benachbarten Klingen (100, 200, 300) übereinander angeordnet sind, wobei die obere Klinge (100, 200, 300) umfasst:
eine untere Oberfläche (102), einen Gleitabschnitt (104) und einen Schneidabschnitt (106), wobei die untere Oberfläche (102) sich zwischen dem Gleitabschnitt (104) und dem Schneidabschnitt (106) erstreckt;
wobei der Schneidabschnitt (106) eine Vielzahl von Schneidzähnen (108) umfasst, die in beabstandeten Intervallen (D) angeordnet sind; und
wobei der Gleitabschnitt (104) mit zumindest einer Einprägung (110) in Bezug auf die untere Oberfläche (102) versehen ist.

18. Schneidgerät nach Anspruch 16, wobei die zwei benachbarten Klingen (100, 200, 300) übereinander angeordnet sind, wobei die untere Klinge (100, 200, 300) umfasst:
eine obere Oberfläche (102), einen Gleitabschnitt (104) und einen Schneidabschnitt (106), wobei die obere Oberfläche (102) sich zwischen dem Gleitabschnitt (104) und dem Schneidabschnitt (106) erstreckt;
wobei der Schneidabschnitt (106) eine Vielzahl von Schneidzähnen (108) umfasst, die in beabstandeten Intervallen (D) angeordnet sind; und
wobei der Gleitabschnitt (104) mit zumindest einer Einprägung (110) in Bezug auf die obere Oberfläche (102) versehen ist.

19. Schneidgerät nach einem der Ansprüche 16 bis 18, wobei die zumindest eine der Schneidklingen (100, 200, 300) von einem Motor angetrieben wird.

## Revendications

1. Ensemble lame de coupe pour un appareil de coupe, l'ensemble lame de coupe comprenant au moins deux lames de coupe adjacentes, dans lequel au moins l'une des lames de coupe est agencée pour se déplacer en va-et-vient par rapport à l'autre/aux autres lame(s) de coupe, et dans lequel une première lame des au moins deux lames de coupe adjacentes (100, 200, 300) comprend :
une surface (102), une partie coulissante (104) et une partie de coupe (106), où la surface (102) s'étend entre la partie coulissante (104) et la partie de coupe (106) ;
la partie de coupe (106) comprend une pluralité de dents de coupe (108) agencées à des intervalles espacés (D) ;
**caractérisé en ce que**
la partie coulissante (104) de la première lame de coupe (100, 200, 300) est munie d'au moins un bossage (110) par rapport à la surface (102) de la première lame de coupe (100, 200, 300), et **en ce que** l'au moins un bossage (110) de la première lame de coupe (100, 200, 300) est agencé de manière à être en contact avec une surface d'une deuxième lame des au moins deux lames de coupe adjacentes.

2. Ensemble lame de coupe selon la revendication 1, dans lequel l'au moins un bossage (110) est positionné le long d'un axe longitudinal (A) de la première lame de coupe (100, 200, 300).

3. Ensemble lame de coupe selon la revendication 2, dans lequel l'au moins un bossage (110) est positionné entre deux trous (112) incorporés le long de l'axe longitudinal (A) de la première lame de coupe (100, 200, 300).

4. Ensemble lame de coupe selon la revendication 2, dans lequel au moins deux bossages (110) sont positionnés de manière symétrique au tour de trous (112) incorporés le long de l'axe longitudinal (A) de la première lame de coupe (100, 200, 300).

5. Ensemble lame de coupe selon la revendication 1, dans lequel au moins deux bossages (110) sont positionnés le long d'une ligne perpendiculaire à un axe longitudinal (A) de la première lame de coupe (100, 200, 300), et dans lequel les au moins deux bossages (110) sont espacés de l'axe longitudinal (A) d'une distance égale.

6. Ensemble lame de coupe selon l'une des revendications 1 à 5, dans lequel l'au moins un bossage (110) s'élève à une hauteur (H) d'au moins 0,05 mm par rapport au reste de la surface (102) de la première lame de coupe (100, 200, 300).

7. Ensemble lame de coupe selon l'une des revendications 1 à 5, dans lequel l'au moins un bossage (110) s'élève à une hauteur (H) de moins de 0,15 mm par rapport au reste de la surface (102) de la première lame de coupe (100, 200, 300).

8. Ensemble lame de coupe selon l'une des revendications 1 à 5, dans lequel l'au moins un bossage (110) s'élève à une hauteur (H) de moins de 0,2 mm par rapport au reste de la surface (102) de la première lame de coupe (100, 200, 300).

9. Procédé de fabrication d'un ensemble lame de coupe pour un appareil de coupe, l'ensemble lame de coupe comprenant au moins deux lames de coupe adjacentes, dans lequel au moins l'une des lames de coupe est agencée pour se déplacer en va-et-vient par rapport à l'autre/aux autres lame(s) de coupe, une première lame desdites au moins deux lames de coupe adjacentes (100, 200, 300) comprend une surface (102), une partie coulissante (104) et une partie de coupe (106), la surface (102) étant agencée de manière à être au moins partiellement en contact avec une surface correspondante d'une deuxième lame desdites au moins deux lames de coupe adjacentes, le procédé comprend le fait :
de fournir la partie de coupe (106) avec une pluralité de dents de coupe (108) agencées à des intervalles espacés (D) ; et
de fournir au moins un bossage (110) sur la partie coulissante (104) par rapport à la surface (102) de la première lame de coupe (100, 200, 300).

10. Procédé selon la revendication 9, comprend en outre le positionnement de l'au moins un bossage (110) le long d'un axe longitudinal (A) de la première lame de coupe (100, 200, 300).

11. Procédé selon la revendication 10, comprend en outre le positionnement de l'au moins un bossage (110) entre deux trous (112) incorporés le long de l'axe longitudinal (A) de la première lame de coupe (100, 200, 300).

12. Procédé selon la revendication 10, comprend en outre le positionnement, de manière symétrique, d'au moins deux bossages (110) autour de trous (112) incorporés le long de l'axe longitudinal (A) de la première lame de coupe (100, 200, 300).

13. Procédé selon la revendication 9, comprend en outre le positionnement d'au moins deux bossages (110) le long d'une ligne perpendiculaire à un axe longitudinal (A) de la première lame de coupe (100, 200, 300) ; et l'espacement des au moins deux bossages (110) de l'axe longitudinal (A) d'une distance égale.

14. Procédé selon les revendications 9 à 13, dans lequel la fourniture de l'au moins un bossage (110) sur la partie coulissante (104) comprend :
au moins l'un(e) parmi :
un estampage ; une application d'un point de soudure ; un soudage ; un brasage d'une partie métallique ; et une accumulation de métal par usinage au laser.

15. Procédé selon la revendication 14, dans lequel la fourniture de l'au moins un bossage (110) par l'estampage comprend l'utilisation d'un outil de découpage pour limiter une zone du bossage (110).

16. Appareil de coupe comprenant un ensemble de coupe comprenant au moins deux lames de coupe adjacentes (100, 200, 300), les lames de coupe (100, 200, 300) agencées pour se déplacer en va-et-vient les unes par rapport aux autres, dans lequel au moins l'une des lames de coupe (100, 200, 300) comprend :
une surface (102), une partie coulissante (104) et une partie de coupe (106), où la surface (102) s'étend entre la partie coulissante (104) et la partie de coupe (106) ;
la partie de coupe (106) comprend une pluralité de dents de coupe (108) agencées à des intervalles espacés (D),
**caractérisé en ce que**
la partie coulissante (104) est munie d'au moins un bossage (110) par rapport à la surface (102), et **en ce que** l'au moins un bossage (110) de l'au moins une lame de coupe (100, 200, 300) est en contact avec la surface de la lame de coupe adjacente (100, 200, 300).

17. Appareil de coupe selon la revendication 16, de sorte que les deux lames adjacentes (100, 200, 300) soient agencées l'une sur l'autre, dans lequel la lame supérieure (100, 200, 300) comprend :
une surface inférieure (102), une partie coulissante (104) et une partie de coupe (106), où la surface inférieure (102) s'étend entre la partie coulissante (104) et la partie de coupe (106) ;
la partie de coupe (106) comprend une pluralité de dents de coupe (108) agencées à des intervalles espacés (D) ; et
la partie coulissante (104) est munie d'au moins un bossage (110) par rapport à la surface inférieure (102).

18. Appareil de coupe selon la revendication 16, de sorte que les deux lames adjacentes (100, 200, 300) soient agencées l'une sur l'autre, dans lequel la lame inférieure (100, 200, 300) comprend :
une surface supérieure (102), une partie coulissante (104) et une partie de coupe (106), où la surface supérieure (102) s'étend entre la partie coulissante (104) et la partie de coupe (106) ;
la partie de coupe (106) comprend une pluralité de dents de coupe (108) agencées à des intervalles espacés (D) ; et
la partie coulissante (104) est munie d'au moins un bossage (110) par rapport à la surface supérieure (102).

19. Appareil de coupe selon les revendications 16 à 18, dans lequel l'au moins une des lames de coupe (100, 200, 300) est entraînée par un moteur.
